# EUROPEAN PATENT APPLICATION

(11) **EP 1 949 958 A2**
(43) Date of publication of application: **30.07.2008**
(21) Application number: 08100810.4
(22) Date of filing: 23.01.2008
(51) Int. Cl.: B01J 21/20, B01J 35/00, B01J 38/60, B01J 38/64, C02F 1/72, C02F 1/32, B01J 21/06, B01J 37/34, C02F 1/66, C02F 101/34

(54) **Process for regeneration of photoactivated catalysts used for treatment of liquid or gaseous effluents**

(30) Priority: 24.01.2007 IT MI20070105
(71) Applicant: Societa' Italiana Acetilene & Derivati S.I.A.D. S.p.A. in abbreviated form SIAD S.p.A., 24126 Bergamo (IT)
(72) Inventor: Bissolotti, Giorgio S.I.A.D. S.p.a., 24126, BERGAMO (IT); Pasinetti, Eleonora SIAD S.p.A., 24126, BERGAMO (IT); Peroni, Michela SIAD S.p.A, 24126, BERGAMO (IT)
(74) Representative: Minoja, Fabrizio

(57) **Abstract**

A regeneration process of photo-activated catalysts used in the decontamination, disinfection or treatment of liquid and/or gaseous effluents, in the chemical synthesis and in the treatment, covering or protection of materials, which process comprises the following phases:
- preparation of a regeneration mixture as a function of pH of the the ordinary catalyst operative conditions;
- contactof the regeneration solution with the polluted catalyst;
- irradiation of the catalyst with the appropriate wavelength for the catalyst activation, while keeping it in contact with the solution;
- recovery/treatment of the regeneration mixture;
- drainage or recycle of the regeneration mixture.

## Description

### Summary

The invention discloses a process of activation, regeneration and/or recovery of photo-activated catalyst using the combined actions of luminous radiation and of an aqueous solution with suitable pH conditions. The regeneration process is applicable to any photo-activated catalyst. The costs of such regeneration system are very low.

The present invention refers to a process for activation, recovery and regeneration of photo-activated catalysts, used in processes of decontamination, disinfection or treatment of liquid and/or gaseous effluents and in chemical synthesis and in processes of covering, protection or general treatment of materials.

The process of the invention is applicable to pure and/or doped catalysts, in the form of powder, homogeneous and/or eterogeneous mixture, extrudate, supported on surfaces and/or organic and inorganic substances.

### Background of the invention

The use of catalysts has now become widely diffused in the chemical industry, in the depuration field and in the environmental field in general. Catalysts promote and accelerate chemical processes, otherwise too slow or not achievable. In particular, thanks to the possibilities involved with processes and technologies with low environmental impact, photocatalysis is becoming more and more important.

Photocatalysis is based on the use of very efficient catalysts, that need luminous radiation of a characteristic wave length in order to be activated.

Among the most used catalysts in photocatalysis, there are the solid semiconductors, that for their characteristics are able to oxidize pollutant substances till the complete mineralization in mild conditions of temperature and pressure and using chemicals with a low environmental impact such as sunlight and oxygen.

TiO₂, ZnO, Fe₂O₃, CdS, ZnS, WO₃, etc are among the most utilized semiconductors. Thanks to their electronic characteristics upon luminous radiation, they behave as photosensitizers in redox reactions. In particular the luminous radiation of specific wave length, determinates the jump of electrons in the valence band, causing the formation of electron-valence hole couples. Electrons and valence holes can react with electron donors or acceptors promoting the redox reactions.

The photocatalysis finds its best application in decontamination of wastewater and in purification of gaseous emissions of industrial or vehicular origin.

In addition to these principal applications, after the findings about photosensitizer properties, among which TiO₂ is surely the most used, the photocatalysis has been successfully developed in the treatment of materials and/or surfaces for obtaining antifogging, anti-spot e self-cleaning surfaces. The use of TiO₂ in cements, asphalts, glass and ceramics is an example of these applications.

Photocatalytic mechanisms applied for example to TiO₂, evidenced an efficient antibacterial and antiviral activity. These properties become interesting in the disinfection of water, gas or surfaces.

Together with different practical applications, photocatalysis is an important instrument in chemical synthesis for production of particular reaction intermediates.

Against this broad spectrum of application potentiality, the main problem connected with the use of catalyst is the loss of activity following pollution of the active sites on catalytic surface. During catalysis reactions, the products and reaction intermediates deposit in the catalyst active sites, causing the gradual loss of efficiency of transformation processes.

It has therefore developed, and it is the object of the invention, a combined chemical process able to induce the complete regeneration of polluted catalysts during the operative phases. This process is based on photocatalysis, exploiting the radiation action (natural and/or artificial) in wet environment.

This treatment fulfills the requirements of:
- efficacy
- absence of contact of the operator with toxic/blistering/carcinogenic substances
- easiness of execution
- fast recovery of the catalyst quality and use
- economic feasibility

### Summary of the invention

The object of the present invention is a chemical process for regeneration and/or recovery of photo-activated catalysts used in the decontamination, disinfection or treatment of liquid or gaseous effluents, in the chemical synthesis and in the treatment, covering or protection of materials.

The process is carried out through the combined action of the following components:
- catalyst exposition to luminous radiation (natural and/or artificial);
- catalyst flowing with water at suitable pH conditions.

In particular the process of the invention is essentially consists of the following phases:
- pH correction of the regeneration mixture in function of the normal working pH of the catalyst;
- contact of the regeneration solution with the polluted catalyst;
- catalyst irradiation at the correct wave length for its activation;
- recovery/treatment of the regeneration mixture;
- drainage or recycling of the regeneration mixture.

The invention also refers to the equipment for the catalyst regeneration. The equipment essentially comprises:
a. a feeding line;
b. a pH correction system;
c. a contact reactor;
d. a radiation source;
e. a drainage system.

### Detailed description of the invention

The present invention is applicable to any photo-activated catalyst used in the decontamination, disinfection or treatment of liquid and/or gaseous effluents, in the chemical synthesis and in the material treatment, covering or protection.

The process is based on the combined action of the luminous radiation (natural and/or artificial) and the chemical-physical effect of the water at appropriate pH conditionat appropriate pH conditions.

Water, at appropriate pH condition, promotes the release of pollutant substances from the catalyst. These substances are partially removed by photochemical action thanks to luminous radiation. Part of the removed contaminants, typically the first, more concentrated fraction, can be washed out by the hydraulic flow. In this case, the hydraulic flow from regeneration is collected and, in function of its concentration, subjected to a decontamination treatment (photocatalysis, absorption on activated carbons, membrane filtration, biological process, etc.). The wastewater exiting the regeneration process, treated or not, can be recycled at the head of the process itself.

The appropriate pH of the hydraulic flow used for regeneration is to be individuated for each specific case. In particular pH depends on the type of use of catalyst. pH values for use in the invention process can be determined as follows:
- when the catalyst works in neutral/basic environment, regeneration has to be effected in acid environment;
- when the catalyst works in acid environment, regeneration has to be effectued in neutral/basic environment.

Regeneration time changes from 1 hour to 10 days, in function of the type of contamination, catalyst and radiation.

Hydraulic fluxes used for regeneration change, depending on the type and the form of catalyst, from 0,01 l/kg_{CATALYST}/h to 100 l/kg_{CATALYST}/h.

This type of treatment allows to recover till 100% of the original activity of the catalyst, permitting to render its duration theoretically endless.

The regeneration mixture feeding can be continuous and/or batchwise, through mechanic, pneumatic, hydraulic systems, by fall or under pressure.

Photo-activation can be either of natural origin, i.e. sunlight, either artificial with a luminous radiation source that can be inside or outside the regeneration bath, either direct or indirect. Radiation can be continuous or discontinuous.

Catalyst to be regenerated can be subjected to complete, partial or cyclic immersion and it can be contacted with the regeneration mixture by flowing, dropping, vaporization and/or immersion.

Temperature of regeneration bath can vary from -20 to 200°C, preferably from 0 to 50°C.

Regeneration mixture is then flushed and/or treated and/or recycled and/or re-used and/or disposed. The optional treatment of the regeneration mixture can be carried out with any decontamination system (biological/chemical/physical/chemical-physical).

The regeneration reactor can be made of plastic, metal, cement, glass or mixtures of these materials provided it is compatible with the treated substances.

pH correction, in the equipment object of the invention, can be performed manually or automatically, on line or in a contact basin.

The application field of the process above described regards the regeneration of any type of photo-activated catalyst (pure, doped, in powder, in homogeneous and/or heterogeneous mixtures, extruded, supported on surfaces, supported on organic and/or inorganic substances, etc.) used in the following, non exhaustive, process:
- decontamination/disinfection of different kind of wastewater (industrial, urban, mixed, used in production processes, etc.);
- decontamination/disinfection of groundwater;
- treatment of water and/or liquids used in industry and/or in production processes;
- decontamination/disinfection of tap water;
- improvement of tap water quality;
- decontamination of gaseous fluxes;
- treatment of gaseous fluxes used in industry and/or in production processes;
- reduction of atmospheric pollution;
- improvement of indoor air quality;
- protection of surfaces and/or materials from pollutant and/or deteriorating agents (chemical and/or biological);
- production/treatment of materials (paper, timber, glass, crystal, metal, textile, polymer, cement, asphalt, tile, etc.) in order to induce chemical-physical and/or visual changes;
- processes of chemical synthesis;
- processes of bio-chemical synthesis.

### Applicative example

The results obtained using different regeneration systems for recovering a photocatalyst used in wastewater decontamination are reported in the following. Evaluation of catalyst recovery was made verifying the photocatalytic performances before and after regeneration. In particular, the photocatalytic performance was evaluated using the same 1.5 litres pyrex reactor containing a 40 W UV lamp, filled with about 1.2 kg of TiO₂ Degussa 7708 catalyst in pellets and fluxed with pure oxygen. The useful reactor volume was 400 ml. The wastewater treated was feed continuously with flow of 1.5-3.0 I/d and it consisted of a synthetic solution of phenol (0.2-0.4 gPhenol/l equal to 0.5-1.0 gCOD/l) prepared with acidified well water.

Two kinds of regeneration methods were used:
- wet regeneration: it is carried out laying the catalyst on a plane disc exposed to sun light and conituosly feeding with regeneration water (either acid o basic) with flow of about 2.5 I/d. Catalyst was submerged by a thin water layer in order to minimize the shielding effect on solar rays. Feed water had a natural oxygen concentration of 5-7 mg/l.
- dry regeneration: it is carried out laing the catalyst on a plane disc exposed to sun light.

Systems so equipped, were exposed to sun radiation for 7-10 days. The catalyst was periodically re-mixed in order to regenerate the fraction remained in the shade of the other catalyst.

The process of the invention is schematized in the annexed Figure.

Following tables show the performance of photocatalytic process obtained after regenerations. In particular in the tabless, the item "cycles number" represents the number of treatment cycles executed by catalyst, while the items "Phenol efficiency" and "COD efficiency" represent the phenol and COD oxidation efficiency recorded in the different sampleings.

Tab. 1 reports the efficiency of the oxidative process obtained with virgin catalyst.

**Tab. 1: Photocatalytic process test with virgin catalyst**

| Sample | Cycle number Cycle number | pH | Phenol efficiency | COD efficiency |
|---|---|---|---|---|
| In | | 2.89 | | |
| Out 1 | 6.3 | 5.01 | | 71% |
| Out 2 | 11.4 | 5.96 | | 63% |
| Out 3 | 30.1 | 3.90 | | 57% |
| Out 4 | 35.3 | 4.15 | | 61% |
| Out 5 | 41.1 | 3.38 | | 61% |
| In | | 2.01 | | |
| Out 6 | 69.9 | 2.02 | 40% | 33% |
| Out 7 | 24.9 | 1.98 | 40% | 33% |
| Out 8 | 79.3 | 1.97 | 43% | 34% |

It is evident that after 50 working cycles, catalyst showed a loss of activity. In particular, in correspondence of the loss of activity, pH of the treatment effluent is about the same as the pH of the influent. In the first working cycles, in which catalyst demonstrates a good efficiency of 60-70%, the effluent pH is higher (or anyway different) from the pH influent. This observation, as we will see, is repeated in the other tests carried out. Catalyst activity manifests itself, indeed, with a modification of the effluent pH with respect to the influent pH. When this difference cancels out, catalyst loses its activity.

Tab. 2 reports results obtained with the same catalyst of the previous test, regenerated by wet regeneration with acidified water flowing (pH=1.18).

**Tab. 2: Photocatalytic process test after first regeneration - sunlight exposition and acidified water flowing**

| Sample | Cycle number | pH | Phenol efficiency | COD efficiency |
|---|---|---|---|---|
| In | | 1.73 | | |
| Out 1 | 15.1 | 1.70 | 41% | 42% |
| Out2 | 18.7 | 1.74 | 42% | 43% |
| Out 3 | 22.1 | 1.71 | 40% | 43% |
| Out4 | 31.2 | 1.77 | 38% | 37% |

It is evident that in this condition, catalyst doesn't recover its original efficiency. It should be pointed out that the effluent pH is the same as the influent pH.

Tab. 3 reports results obtained with the same catalyst subjected to regeneration by dry sunlight exposition.

Again, the catalyst doesn't show any activity recovery, and pH of influent and effluent turn out to be the same.

**Tab. 3: Photocatalytic process test after second regeneration - dry sunlight exposition**

| Sample | Cycle number | pH | Phenol efficiency | COD efficiency |
|---|---|---|---|---|
| In | | 1.90 | | |
| Out 1 | 6.18 | 2.03 | 51% | 39% |
| Out2 | 8.99 | 1.99 | 50% | 44% |
| Out 3 | 13.2 | 1.99 | 54% | 46% |
| Out4 | 17.7 | 1.95 | 53% | 33% |
| Out 5 | 36.2 | 1.91 | 55% | 47% |
| Out 6 | 40.5 | 1.91 | 55% | 51% |
| Out 7 | 47.6 | 1.90 | 38% | 35% |
| In | | 2.25 | | |
| Out 8 | 76.7 | 2.28 | 50% | 46% |
| Out 9 | 83.6 | 2.31 | 48% | 46% |
| Out 10 | 91.2 | 2.29 | 51% | 49% |

Tab. 4 reports results obtained in the third regeneration cycle carried out on the same catalyst through a wet regeneration with alkaline water flowing (pH = 8). It should be pointed out that the catalyst shows the complete recovery of depuration efficiency. As catalyst recovers its activity, a corresponding increase in the effluent pH respect to the influent one is recorded.

**Tab. 4: Photocatalytic process test after third regeneration - sunlight exposition and alkaline water flowing (pH=8)**

| Sample | Cycle number | pH | Phenol efficiency | COD efficiency |
|---|---|---|---|---|
| In | | 3.05 | | |
| Out 1 | 3.4 | 5.80 | 93% | 93% |
| Out 2 | 8.2 | 6.13 | 95% | 94% |
| Out 3 | 23.0 | 6.39 | 95% | 92% |
| Out 4 | 27.7 | 6.16 | 95% | 90% |
| Out 5 | 32.6 | 5.92 | 95% | 91% |
| Out 6 | 37.4 | 5.99 | 95% | 91% |
| Out 7 | 45.1 | 6.14 | 83% | 79% |
| In | | 2.49 | | |
| Out 8 | 66.7 | 2.89 | 43% | 41% |
| Out 9 | 73.9 | 2.67 | 42% | 35% |
| Out 10 | 81.7 | 2.48 | 39% | 32% |
| Out 11 | 89.2 | 2.51 | 41% | 34% |
| Out 12 | 96.4 | 2.48 | 43% | 37% |

Visually, before third regeneration catalyst showed dark brown colour. After regeneration catalyst recovery its original white colour.

After about 50 cycles catalyst demonstrates the activity loss, and in correspondence, it is recorded a new parity among of pH of the influent and effluent.

Tab. 5 reports the results of the 4th regeneration carried out as in previous test and on the same catalyst. It is confirmed that the catalyst recovered its original performances.

**Tab. 5: Photocatalytic process test after fourth regeneration - sunlight exposition and alkaline water flowing (pH=8)**

| Sample | Cycle number | pH | Phenol efficiency | COD efficiency |
|---|---|---|---|---|
| In | | 2.01 | | |
| Out 1 | 3.7 | 6.44 | 96% | 92% |
| Out2 | 9.0 | 5.96 | 84% | 80% |
| Out 3 | 16.7 | 5.00 | 66% | 63% |
| Out4 | 21.9 | 5.12 | 78% | 77% |
| Out 5 | 39.6 | 4.96 | 77% | 76% |
| Out 6 | 44.7 | 5.08 | 78% | 76% |
| Out 7 | 49.4 | 2.95 | 54% | 49% |
| Out 8 | 54.3 | 2.19 | 53% | 49% |
| Out 9 | 59.1 | 2.13 | 54% | 48% |

After about 50 cycles, the catalyst loss of activity is again shown, with reduction of the pH effluent to the values of the influent.

A fundamental element in order to regenerate catalyst is the pH difference between regeneration water and feed wastewater.

In particular, if acid wastewater is fed during the operative phase, regeneration has to be carried out with alkaline water. On the contrary, if the photocatalytic process concerns wastewater with neutral or alkaline pH, regeneration is to be carried out with an acidic solution. In order to demonstrate this assertion, reference is made to Tab. 2 which shows the regeneration inefficiency carried out with acid water on a catalyst subsequently feed with acid wastewater.

As further evidence, it was carried out an other regeneration with acid water (pH = 2) on the same catalyst, used in photocatalytic treatment of a phenolic wastewater with pH of 5,5 - 6.

Tab. 6 shows the results obtained in this working condition.

**Tab. 6: Photocatalytic process test after fifth regeneration sunlight exposition and acidified water flowing (pH=2)**

| Sample | Cycle number | pH | Phenol efficiency | COD efficiency |
|---|---|---|---|---|
| In | | 5,95 | | |
| Out 1 | 3,4 | 2,58 | 79% | 65% |
| Out 2 | 7,5 | 2,54 | 77% | 64% |
| Out 3 | 11,4 | 2,61 | 78% | 68% |
| In | | 6,27 | | |
| Out 4 | 25,5 | 3,14 | 80% | 73% |
| Out 5 | 30,7 | 3,38 | 73% | 75% |
| In | | 6,76 | | |
| Out 6 | 36,1 | 3,56 | 72% | 65% |
| Out 7 | 46,6 | 3,82 | 34% | 28% |
| Out 8 | 57,6 | 3,87 | 34% | 27% |

It is evidenced that the catalyst recovers its original conditions. It is pointed out that pH of the effluent of the photocatalytic process is inferior to the influent one.

In order to better comprehend the experimental evidences, it can be useful to consider the principal photocatalytic mechanisms. Photocatalytic process is based on catalyst activation through UV light of a specific wave length. The activation wave length of titanium dioxide is 366 nm. The activation induced the energy hop of the electrons of TiO₂ atoms and thus the formation of the couple electrons-valence holes (e⁻- h⁺).

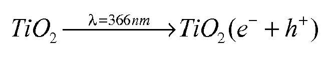

The reaction of valence holes h⁺ with the ions OH⁻ and the water molecules absorbed on the catalyst surface, causes the formation of OH* radicals.

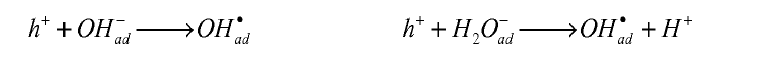

Free electrons react with dissolved oxygen causing the formation of super-oxide ions O₂⁻.

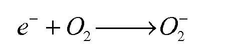

Organic compounds dissolved in water are thus oxidized and reduced to CO₂. During the functioning, the pollutant molecules stay "blocked" in the active sites, determining the slow catalyst exhaustion.

During the regeneration phases, desorption and reduction of the organic compounds left on the catalyst surface take place. The wet exposition of catalyst to the sun UV radiation results more efficient, because both desorption and reducing mechanisms are more efficient. The former due to the water solvent action, also as a function of the water pH, and the latter, for the fundamental role of water in the production of OH· radicals.

In these terms the fundamental action of water in the regeneration phase and the influence of the regeneration water pH gradient with respect to feed wastewater of the photocatalytic process, can be explained.

It is to be underlined that the catalyst used in the regeneration study, was subjected to 415 operative cycles during 6 months of continuous tests. Although some regeneration tests proved inefficient, once the right methodology was set up, catalyst regained its original activity. In these terms,catalyst results to be regenerable and its life becomes limited only by mechanic resistance.

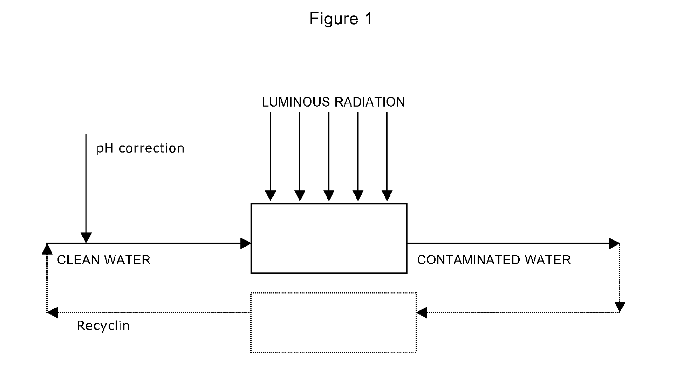

## Claims

1. A regeneration process of photo-activated catalysts used in the decontamination, disinfection or treatment of liquid and/or gaseous effluents, in the chemical synthesis and in the treatment, covering or protection of materials, which process comprises the following phases:
- preparation of a regeneration mixture as a function of pH of the the ordinary catalyst operative conditions;
- contactof the regeneration solution with the polluted catalyst;
- irradiation of the catalyst with the appropriate wavelength for the catalyst activation, while keeping it in contact with the solution;
- recovery/treatment of the regeneration mixture;
- drainage or recycle of the regeneration mixture.

2. Process of claim 1, in which the regeneration is performed at acid pH when the catalyst to be regenerated has been processed in neutral/basic environment.

3. Process of claim 1, in which the regeneration is performed at neutral or basic pH when the catalyst to be regenerated has been processed in acid environment.

4. Process of claims 1-3, in which the regeneration mixture feeding is carried out a continuously o or batchwise.

5. Process of claims 1-4, in which the regeneration mixture feeding is carried out by a mechanic, pneumatic, hydraulic, drop or pressure system.

6. Process of claims 1-5, in which the feeding of the regeneration mixture is carried out at flows within the range of 0.01 - 100 l/kg_{CATALYST}/h, preferably within the range of 0.1 - 1 l/kg_{CATALYST}/h.

7. Process of claims 1-6, in which the photo-activation is of natural and/or artificial origin.

8. Process of claims 1-7, in which the light irradiation source is inside or outside the regeneration reactor.

9. Process of claims 1-8, in which the photo-activation source is direct and/or indirect.

10. Process of claims 1-9, in which irradiation time ranges between 1 hour and 10 days.

11. Process of claims 1-10, in which the catalyst is submitted to complete, partial or cyclic immersion.

12. Process of claims 1-11, in which the catalyst is contacted with the regeneration mixture through flowing, dropping, vaporization, immersion.

13. Process of claims 1-12, in which the catalyst is subjected to continuous and/or discontinuous irradiation.

14. Process of claims 1-13, in which the regeneration bath reaction temperature ranges between -20°C and 200°C, preferably between 0°C and 50°C.

15. Process of claims 1-14, in which the regeneration mixture is drained and/or treated and/or recycled and/or reutilized and/or disposed.

16. Process of claims 1-15, in which the optional treatment of the regeneration mixture, for recycling purposes, is carried out by means of any decontamination system (biological/chemical/chemical-physical).

17. Process of claims 1-16, in which the regeneration reactor is made of plastic, metallic, concrete or glass material provided that it is compatible with the treated substances.

18. Equipment for the regeneration of photo-activated catalysts, utilized in the chemical and environmental fields, which substantially comprises:
a. A feeding line
b. A pH correction system
c. A contact reactor
d. An irradiation source
e. Adrainage system.

19. Equipment of claims 18, in which the pH correction can be either manual or automatic, on line or through a contact basin.
